# EUROPÄISCHE PATENTSCHRIFT

(11) **EP 0 443 345 B1**
(45) Veröffentlichungstag und Bekanntmachung des Hinweises auf die Patenterteilung: **06.10.1993**
(21) Anmeldenummer: 91101081.7
(22) Anmeldetag: 28.01.1991
(51) Int. Cl.: B60J 10/04

(54) **Dichtelement aus gummielastischem Material**
Sealing element made of gum elastic material
Elément d'étanchéité en caoutchouc

(30) Priorität: 20.02.1990 DE 4005262
(43) Veröffentlichungstag der Anmeldung: 28.08.1991
(73) Patentinhaber: Bayerische Motoren Werke Aktiengesellschaft, 80788 München (DE)
(72) Erfinder: Hennig, Herbert, W-8000 München 82 (DE)

(56) Entgegenhaltungen:
- EP-A- 0 130 621
- EP-A- 0 343 046
- FR-A- 2 555 650

## Beschreibung

Die Erfindung bezieht sich auf ein Dichtelement aus gummielastischem Material der im Oberbegriff des Patentanspruchs 1 genannten und beispielsweise aus der DE-A-2 913 699 hervorgehenden Art.

Derartige Dichtelemente sind üblicherweise an ihrer der Fensterscheibe zugewandten Anlageseite mit einer Beflockung versehen. Diese kann sich jedoch sehr leicht mit Wasser vollsaugen und hat dabei auch eine große Feuchtigkeits-Speicherwirkung, so daß beim Verlagern der Fensterscheibe in ihre Schließstellung die Scheibenoberfläche über einen verhältnismäßig langen Zeitraum mit Feuchtigkeit benetzt werden kann. Hierdurch entsteht an der Scheibenoberfläche eine unschön wirkende Schlierenbildung. Darüber hinaus ist auch die Beflockung des Dichtelements sehr schalldurchlässig.

Aufgabe der Erfindung ist es daher, die Dichtlippe eines Dichtelements der im Oberbegriff des Patentanspruchs 1 genannten Art in einfacher und kostengünstiger Weise derart auszubilden, daß die verschmutzte und/oder feuchte Oberfläche einer Fensterscheibe durch deren bloßes Verlagern mindestens größtenteils gereinigt und/oder das Wasser abgestreift wird.

Zur Lösung der Aufgabe sind die im kennzeichnenden Teil des Patentanspruchs 1 dargelegten Merkmale vorgesehen.

Die erfindungsgemäß an der Dichtlippe des Dichtelements über ein Filmscharnier angelenkte Abstreiflippe liegt mit exakt definiertem Anpreßdruck an der Scheibenoberfläche an, so daß diese beim Verlagern der Fensterscheibe gleichbleibend gereinigt bzw. eine vorhandene Feuchtigkeit abgestreift wird, wobei vor allem auch keine Schlieren an der Scheibenoberfläche entstehen. Ferner wird auch durch die Abstreiflippe die Abdichtwirkung sowie die Schalldichtheit des Dichtelements erhöht. Dieses kann auch vorteilhafterweise mit einer eisabweisenden Beschichtung wie Polytetrafluoräthylen o. dgl. versehen sein, wobei durch die Abstreiflippe keine an der Scheibenoberfläche vorhandene Staubpartikel o. dgl. in die eisabweisende Beschichtung gelangen können. Die Abstreiflippe ist zwar üblicherweise am fahrzeugaußenseitigen Dichtelement vorgesehen; zusätzlich zu oder anstelle von dieser Anordnung kann sich auch eine Abstreiflippe am fahrzeuginnenseitigen Dichtelement befinden.

Schließlich hat die Abstreiflippe ein etwa dreieckförmiges Querschnittsprofil, dessen spitz zulaufender Bereich an der Fensterscheibe anliegt, während an der breiten Rückseite das Filmscharnier ausgebildet ist (Merkmale des Patentanspruchs 2).

Ein Ausführungsbeispiel der Erfindung ist in der Zeichnung dargestellt und wird im folgenden erläutert. Es zeigt:
- Fig. 1: einen Vertikalschnitt einer Seitenscheibe eines Personenkraftwagens im Bereich eines Fensterschachtes, wobei die Fensterscheibe abwärts verlagert wird,
- Fig. 2: eine der Fig. 1 im wesentlichen entsprechende Darstellung, jedoch beim Aufwärtsverlagern der Fensterscheibe.

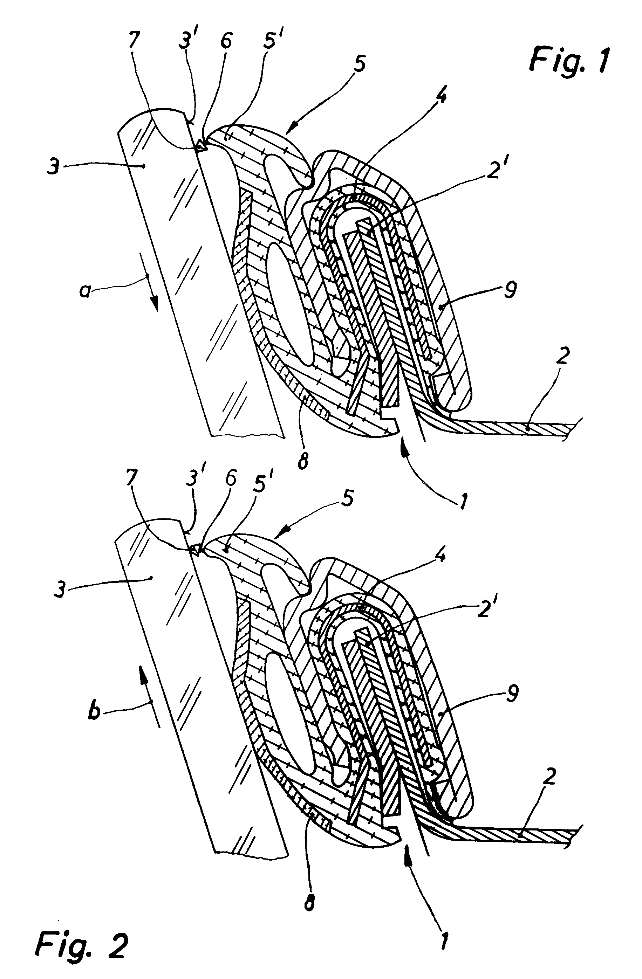

Wie in den Fig. 1 und 2 ersichtlich, befindet sich in einer Seitenwand oder in einer Tür eines Personenkraftwagens ein etwa lotrecht verlaufender Fensterschacht 1, der von einer außenliegenden Wandung 2 mit Randflansch 2' begrenzt ist. Dabei ist im Fensterschacht 1 eine Fensterscheibe 3 über einen nicht dargestellten Fensterheber etwa lotrecht verschiebbar angeordnet.

Dabei ist auf dem Randflansch 2' der Wandung 2 durch eine Klammer 4 ein längs des Fensterschachts 1 verlaufendes Dichtelement 5 aus gummielastischem Material lösbar befestigt. Am obenliegenden Rand des Dichtelements 5 ist eine längs diesem verlaufende Dichtlippe 5' ausgebildet, an der über ein Filmscharnier 6 eine ihrerseits an der außenliegenden Oberfläche 3' der Fensterscheibe 3 anliegende und sich entsprechend der Dichtlippe 5' erstreckende Abstreiflippe 7 hoch- und niederschwenkbar angelenkt ist. Dabei hat die Abstreiflippe 7 ein dreieckförmiges Querschnittprofil, dessen spitz zulaufender Bereich an der Scheibenoberfläche 3' mit Reibkontakt anliegt, während an der breiten Rückseite das Filmscharnier 6 ausgebildet ist.

In Fig. 1 ist ersichtlich, daß beim Abwärtsverlagern der Fensterscheibe 3 in Pfeilrichtung a die Abstreiflippe 7 durch den zwischen den beiden Teilen vorhandenen Reibkontakt abwärts geschwenkt und dadurch an der Scheibenoberfläche 3' vorhandene Nässe und/oder Schmutz durch die Abstreiflippe 7 abgestreift wird, während beim Hochschieben der Fensterscheibe 3 in Pfeilrichtung b (Fig. 2) die Dichtlippe 7 nach oben geschwenkt und dadurch ebenfalls unterhalb dieser an der Scheibenoberfläche 3' vorhandener Schmutz und/oder Nässe abgestreift wird.

Das gummielastische Dichtelement 5 hat eine an der Scheibenoberfläche 3' anliegende eisabweisende Beschichtung 8, wobei zwischen diese und die Fensterscheibe 3 bei deren Verlagern in Pfeilrichtung a durch die Abstreiflippe 7 keine Schmutzpartikel o. dgl. gelangen können. Schließlich ist das gummielastische Dichtelement 5 im Umfangsbereich der Klammer 4 von einer U-förmigen Blende 9 umgeben, die ihrerseits im Bereich des Randflansches 2' angeordnet ist.

## Patentansprüche

1. Dichtelement (5) aus gummielastischem Material für eine in einem Fensterschacht (1) eines Kraftfahrzeugs verschiebbare, insbesondere höhenverschiebbare Fensterscheibe (3) mit wenigstens einer an mindestens einem Rand des Fensterschachts (1) angeordneten und längs diesem verlaufenden Dichtlippe (5'), dadurch gekennzeichnet, daß die Dichtlippe (5') mit wenigstens einer, ihrerseits an der Fensterscheibe (3) anliegenden Abstreiflippe (7) versehen ist, die an der Dichtlippe (5') in Verlagerungsrichtung (Pfeilrichtung a, b) der Fensterscheibe (3) über ein Filmscharnier (6) angelenkt ist, dessen Schwenkachse etwa quer zur Verlagerungsrichtung (Pfeilrichtung a, b) der Fensterscheibe (3) verläuft.

2. Dichtelement (5) nach Anspruch 1, dadurch gekennzeichnet, daß die Abstreiflippe (7) ein etwa dreieckförmiges Querschittsprofil aufweist, dessen spitz zulaufender Bereich an der Fensterscheibe (3) anliegt.

## Claims

1. A sealing element (5) made of elastomeric material for a window-pane (3) movable, more especially vertically, in a window shaft (1) of a motor vehicle, comprising at least one sealing lip (5') disposed on and extending along at least one edge of the window shaft (1), characterised in that the sealing lip (5') has at least one wiping lip (7) abutting the window pane (3) and pivoted to the sealing lip (5') in the direction of movement (arrow a, b) of the window-pane (3) via a film hinge (6), the axis of rotation of which extends approximately transversely to the direction of movement (arrow a, b) of the window-pane (3).

2. A sealing element (5) according to claim 1, characterised in that the wiping lip (7) has an approximately triangular cross-section, with a tapering region adjoining the window-pane (3).

## Revendications

1. Elément d'étanchéité (5) en matière élastique comme du caoutchouc pour une vitre de fenêtre (3) pouvant coulisser dans un puits de fenêtre (1) d'un véhicule à moteur, en particulier pouvant coulisser dans le sens de la hauteur, avec au moins une lèvre d'étanchéité (5'), disposée sur au moins un bord du puits de la fenêtre (1) et s'étendant le long de celui-ci, élément d'étanchéité caractérisé en ce que la lèvre d'étanchéité (5') est pourvue d'au moins une lèvre de raclage (7) reposant de son côté sur la vitre de la fenêtre (3), lèvre de raclage qui est articulée sur la lèvre d'étanchéité (5') par l'intermédiaire d'un film-charnière (6) dans le sens de déplacement (sens de la flèche a,b) de la vitre de fenêtre (3), son axe de pivotement s'étendant à peu près transversalement au sens de déplacement (sens de la flèche a,b) de la vitre de fenêtre (3).

2. Elément d'étanchéité (5) selon la revendication 1, caractérisé en ce que la lèvre de raclage (7) présente en section transversale un profil à peu près triangulaire, dont la zone se terminant en pointe repose sur la vitre de fenêtre (3).
